# EUROPEAN PATENT APPLICATION

(11) **EP 4 180 747 A1**
(43) Date of publication of application: **17.05.2023**
(21) Application number: 21792421.6
(22) Date of filing: 12.04.2021
(51) Int. Cl.: F25D 11/02

(54) **REFRIGERATOR**

(30) Priority: 13.07.2020 CN 202010667415
(71) Applicant: Qingdao Haier Refrigerator Co., Ltd., Laoshan District Qingdao Shandong 266101 (CN); Haier Smart Home Co., Ltd., Qingdao, Shandong 266101 (CN)
(72) Inventor: ZHAO, Kunkun, Qingdao, Shandong 266101 (CN); LIU, Zhanzhan, Qingdao, Shandong 266101 (CN); LI, Peng, Qingdao, Shandong 266101 (CN); ZHU, Xiaobing, Qingdao, Shandong 266101 (CN)
(74) Representative: Lavoix
(86) International application number: PCT/CN2021/086447
(87) International publication number: WO 2021/213202

(57) **Abstract**

The present invention provides a refrigerator, comprising a cabinet and a liner disposed in the cabinet, the cabinet and the liner defining a foaming space, wherein the refrigerator further comprises a material injecting device at least partially located in the foaming space, the material injecting device is provided with a material injecting port and a material dispensing port, the material injecting device is provided with a section of inclined portion at an end adjacent to the material injecting port, and a diameter of an outer circumference of the inclined portion gradually decreases from an end close to the material injecting port to the other end far away from the material injecting port. In the refrigerator according to the present invention, the material injecting device provides a certain mounting space for a vacuum VIP board.

## Description

### TECHNICAL FIELD

The present invention relates to the field of household appliances, and particularly to refrigerators.

### BACKGROUND

A refrigerator comprises a cabinet, a liner and a foam layer located between the cabinet and the liner. To achieve the foaming of the foam layer, for example the Chinese invention patent application CN109849254A published on June 7, 2019 discloses a refrigerator automatic foaming leakage-stopping valve which comprises a material injecting pipe and a sealing cap. A top end of an inner side of the material injecting pipe is hingedly connected with the sealing cap via a connecting plate, the top end of the material injecting pipe is further provided with a limiting pin, a torsion spring cooperating with the sealing cap and the material injecting pipe is sleeved on the limiting pin, and the torsion spring is used to return the sealing cap. Since the material injecting pipe is cylindrical, the foaming material is very prone to pile up at a material dispensing port of the material injecting pipe, thereby affecting the foaming material in entering a front segment of the cabinet and greatly affecting the foaming quality. In addition, the material injecting pipe is very short, it is more difficult to advance the foaming material to the front segment of the cabinet.

In addition, in the prior art, a plastic one-way sheet is mounted on a bottom steel, which is a flippable plastic member mounted on the bottom steel in combination with the spring. After a material injecting gun finishes injecting the material, the gun is drawn out of a material injecting hole, and the elastic sheet rebounds to close the material injecting hole. However, the problem that the foaming material falls closer to the front cannot be solved. A technician increases the amount of injected material to solve the problem. However, increasing the amount of injected material causes an excessive density, a rise of the costs and an undesirable state of the surface of the foaming material. As a result, the foaming pressure of the bottom steel is large, the sealing risk is large, and overflow of the material is apt to occur. Furthermore, the material injecting pipe affects the mounting of a vacuum VIP pipe in the prior art.

### SUMMARY

An object of the present invention is to provide a refrigerator so that a material injecting device provides a certain mounting space for a vacuum VIP board.

To achieve the above object, an embodiment of the present invention provides a refrigerator comprising a cabinet and a liner disposed in the cabinet, the cabinet and the liner defining a foaming space, wherein the refrigerator further comprises a material injecting device at least partially located in the foaming space, the material injecting device is provided with a material injecting port and a material dispensing port, the material injecting device is provided with a section of inclined portion at an end adjacent to the material injecting port, and a diameter of an outer circumference of the inclined portion gradually decreases from an end close to the material injecting port to the other end far away from the material injecting port.

As a further improvement of embodiments of the present invention, the material injecting port comprises a semicircular portion and a square portion tangent to the semicircular portion.

As a further improvement of embodiments of the present invention, the material injecting device further comprises a sealing cap for sealing the material injecting port; when an external force acts on the sealing cap, the sealing cap may be driven to open the material injecting port; when the external force is removed, the sealing cap returns to a position for sealing the material injecting port.

As a further improvement of embodiments of the present invention, the sealing cap is set as an elastic sheet, and the elastic sheet has an upper semicircular portion and a lower square portion connected with both ends of the upper semicircular portion.

As a further improvement of embodiments of the present invention, the material injecting device comprises a material feeding pipe, and a material injecting pipe connected to and communicated with the material feeding pipe, and the inclined portion is disposed on the material feeding pipe.

As a further improvement of embodiments of the present invention, the material injecting pipe extends with the same cross section in a longitudinal direction, and the material injecting pipe comprises a bottom plane portion which abuts against the housing or the liner.

As a further improvement of embodiments of the present invention, the material injecting device further comprises a material dispensing member connected to and communicated with the material injecting pipe, the material feeding pipe and the material dispensing member are respectively connected to both opposed ends of the material injecting pipe, the material dispensing port is disposed on the material dispensing member, and a diameter of an outer circumference of the material dispensing member gradually increases from a portion closer to the material injecting pipe to an end of the material dispensing member, to form the material dispensing port that gradually becomes larger.

As a further improvement of embodiments of the present invention, the material injecting device comprises a material feeding pipe and a material guiding pipe communicated with the material feeding pipe, the inclined portion is disposed on the material feeding pipe, the material guiding pipe has a connecting portion connected to the material feeding pipe and a distal end far away from the material feeding pipe, and a diameter of an outer circumference of the material guiding pipe gradually increases from a portion closer to the connecting portion to the distal end so that the material dispensing port that gradually becomes larger is formed.

As a further improvement of embodiments of the present invention, the material injecting device comprises a material feeding pipe and a material guiding pipe communicated with the material feeding pipe, the inclined portion is disposed on the material feeding pipe, the liner is provided with a support member for supporting the material guiding pipe, and there is a certain gap between the material guiding pipe and the liner.

As a further improvement of embodiments of the present invention, the liner comprises a refrigerating liner and a freezing liner which are partitioned from each other and a middle beam is formed in between, a shielding device is disposed at the middle beam, and a length of the material injecting device in its extension direction is greater than half of a height of the freezing liner and smaller than the height of the freezing liner.

As compared with the prior art, advantageous effects of the present invention are as follows: in the technical solution provided by the present invention, the material injecting portion has the material injecting port, the diameter of the outer circumference of the material dispensing portion gradually increases from an end closer to the material injecting portion to the distal end of the material dispensing portion, to form the material dispensing port that gradually becomes larger, thereby functioning to disperse the foaming material, preventing the pile-up of the foaming material and greatly improving the foaming quality.

### BRIEF DESCRIPTION OF THE DRAWINGS

FIG. 1 is a perspective view of a refrigerator in a first embodiment of the present invention;
FIG. 2 is a bottom view of the refrigerator of FIG. 1;
FIG. 3 is a cross-sectional view taken along line A-A of FIG. 2;
FIG. 4 is a partially enlarged view of position B in FIG. 3;
FIG. 5 is a perspective view of a material injecting device of the refrigerator of FIG. 1;
FIG. 6 is a perspective exploded view of the material injecting device in FIG. 5;
FIG. 7 is a longitudinal sectional view of the material injecting device in FIG. 5;
FIG. 8 is a partially enlarged view of position C in FIG. 7;
FIG. 9 is a partially enlarged view of position D in FIG. 7;
FIG. 10 is a perspective view of a refrigerator in a second embodiment of the present invention;
FIG. 11 is a transverse sectional view of the refrigerator of FIG. 10;
FIG. 12 is a partially enlarged view of position E in FIG. 11;
FIG. 13 is a perspective view of a material injecting device of the refrigerator in FIG. 10;
FIG. 14 is a perspective exploded view of the material injecting device in FIG. 13;
FIG. 15 is a partially enlarged view of position F in FIG. 14;
FIG. 16 is a perspective view of a refrigerator in a third embodiment of the present invention;
FIG. 17 is a perspective exploded view of the material injecting device in FIG. 16;
FIG. 18 is a perspective view of a material injecting device of a refrigerator in a fourth embodiment of the present invention.

### DETAILED DESCRIPTION

The present invention will be described in detail in conjunction with specific embodiments shown in the figures. However, these embodiments are not intended to limit the present invention. Structural, methodological or functional variations made by those having ordinary skill in the art according to these embodiments are all included in the protection scope of the present invention.

In the depictions of detailed embodiments of the present invention, the orientation or positional relationship indicated by terms such as "up", "down", "front", "rear", "left", "right", "vertical", "horizontal", "bottom", "in" and "out" etc. is the orientation or positional relationship based on the drawings, usually with reference to the refrigerator when the refrigerator is in a normal in-use state, and does not indicate that the specified positions or elements must have a specific orientation.

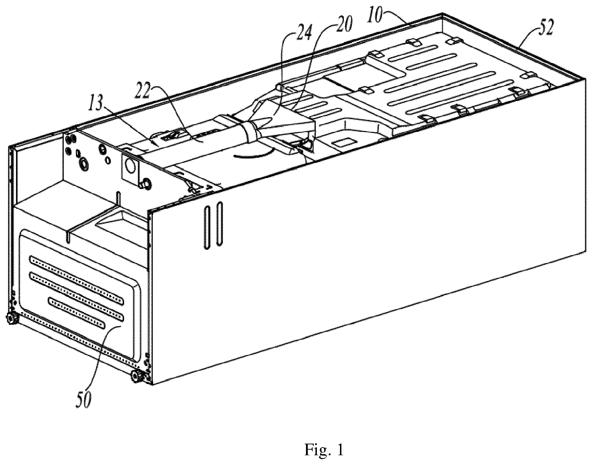

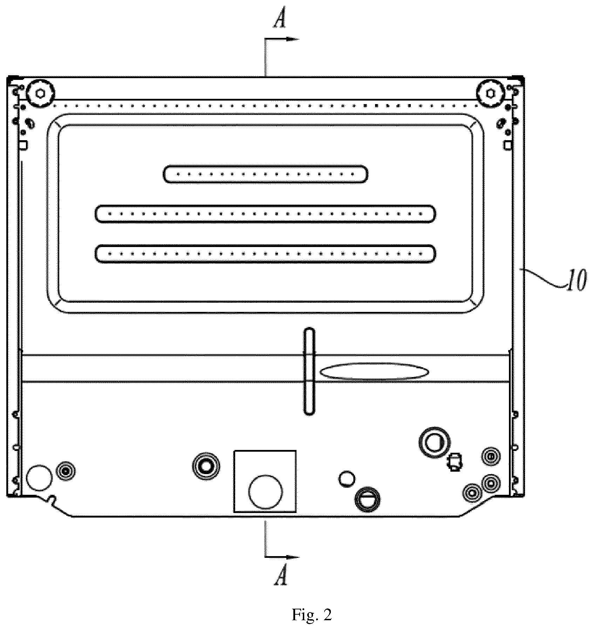

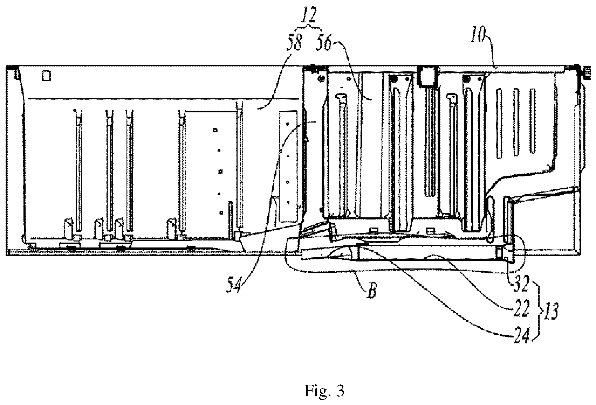

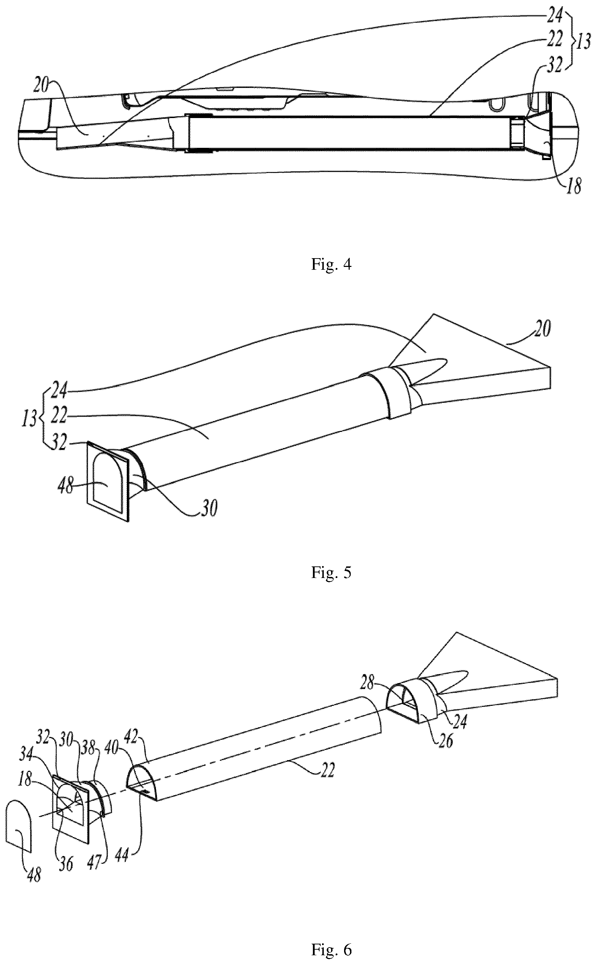

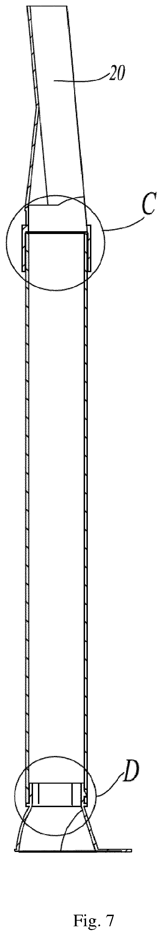

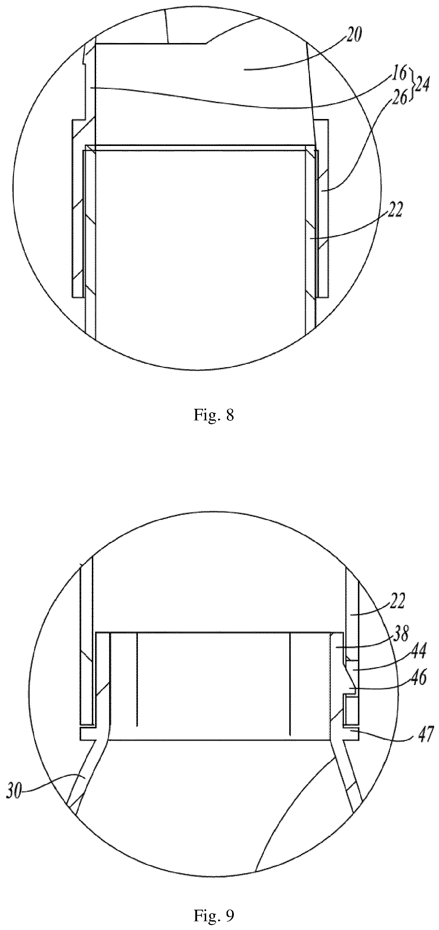

As shown in FIG. 1 through FIG. 9, a first embodiment of the present invention discloses a refrigerator. The refrigerator comprises a cabinet and a door body connected to the cabinet. The cabinet defines a storage space, and the door body may be operated to open or close at least part of the storage space. The storage space may include multiple storage compartments, and the number and structural forms of the storage compartments may be configured according to different demands.

The cabinet comprises a housing 10 and a liner 12 disposed in the housing 10. The housing 10 and the liner 12 define a foaming space, which is used to receive a foaming material to achieve the purpose of heat preservation in the liner 12. The refrigerator further comprises a material injecting device 13 at least partially located in the foaming space, the material injecting device 13 is provided with a material injecting port 18 and a material dispensing port 20, the material injecting device 13 is provided with a section of inclined portion 30 at an end adjacent to a material injecting port 15, and a diameter of an outer circumference of the inclined portion 30 gradually decreases from an end close to the material injecting port 18 to the other end far away from the material injecting port 18.

Generally, a vacuum VIP board is disposed between the housing 10 and the liner 12, and the inclined portion 30 provided on the material injecting device 13 may make a mounting room for the vacuum VIP board.

Specifically, the material injecting device 13 comprises a material feeding pipe 32, and a material injecting pipe 22 connected to and communicated with the material feeding pipe 32, and the material injecting port 18 and the inclined portion 30 are both disposed on the material feeding pipe 32. In the present preferred embodiment, the material feeding pipe 32 and the material injecting pipe 22 are independently manufactured, and then the material feeding pipe 32 and the material injecting pipe 22 are connected together. Specifically, the material feeding pipe 32 and the material injecting pipe 22 are detachably connected. In this way, the material feeding pipe 32 and the material injecting pipe 22 are easy to manufacture so that the mold is simple, thereby reducing the manufacturing cost of the material feeding pipe 32 and the material injecting pipe 22. Certainly, the material feeding pipe 32 and the material injecting pipe 22 may also be integrally formed and manufactured.

The material injecting port 18 comprises a semicircular portion 34 and a square portion 36 tangent to the semicircular portion 34. The material feeding pipe 32 is snap-fitted with the material injecting pipe 22. Certainly, the material injecting pipe 22 and a material dispensing member 24 may be connected in other manners such as by welding or adhesion. The inclined portion 30 is disposed on the material feeding pipe 32. The material feeding pipe 32 has a butt joint 38 connected with the material injecting pipe 22. A cross-section shape of the butt joint 38 is the same as the cross-sectional shape of the material injecting pipe 22. A diameter of the outer circumference of the butt joint 38 is smaller than the diameter of the outer circumference of the material injecting pipe 22. The butt joint 38 is located in the material injecting pipe 22. In the present embodiment, the cross section of the butt joint 38 is also set to be semicircular.

The material injecting pipe 22 extends with the same cross section in a longitudinal direction. The material injecting pipe 22 comprises a bottom plane portion 40 which abuts against the housing 10 or the liner 12. In this way, the material injecting pipe 22 can be more stably supported on the housing 10 or the liner 12.

Furthermore, the material injecting pipe 22 further comprises a circular arc portion 42 which is opposite to and connected with the bottom plane portion 40. Preferably, the circular arc section 42 is set in a shape of a semicircle, that is, the material injecting pipe 22 is a semicircular pipe extending along the longitudinal length.

One of the butt joint 38 and the material injecting pipe 22 is provided with a catching slot 44, and the other of the butt joint 38 and the material injecting pipe 22 is provided with a snap protrusion 46 mated with the catching slot 44. Specifically, in the present embodiment, the snap protrusion 46 is disposed on the butt joint 38, and the catching slot 44 is disposed on the material injecting pipe 22. Certainly, the snap protrusion 46 may also be disposed on the material injecting pipe 22, and correspondingly, the catching slot 44 may be disposed on the butt joint 38. The material feeding pipe 32, the material injecting pipe 22 and material dispensing member 24 are all plastic members. Certainly, the material feeding pipe 32, the material injecting pipe 22 and the material dispensing member 24 may also be made of other materials. Preferably, the snap protrusion 46 is disposed on the bottom plane portion of the butt joint 38, and correspondingly, the catching slot 44 is disposed on the bottom plane portion 40 of the material injecting pipe 22, so that the connection between the material feeding pipe 32 and the material injecting pipe 22 is more stable and reliable.

In order to make the assembling between the material feeding pipe 32 and the material injecting pipe 22 more convenient and reliable, the outer circumference of the butt joint 38 adjacent to the inclined portion 30 extends outward with a stop 47. When the material feeding pipe 32 and the material injecting pipe 22 are assembled, the butt joint 38 is disposed in the material injecting pipe 22 and pushed inward until the butt joint 38 cannot be pushed further, whereupon the material injecting pipe 22 abuts against the stop. At this time, the snap protrusion 46 mates with the catching slot 44.

The material injecting device 13 also comprises the material dispensing member 24 which is connected with and communicated with the material injecting pipe 22. The material feeding pipe 32 and the material dispensing member 24 are respectively connected to opposite ends of the material injecting pipe 22, and the material dispensing port 20 is disposed on the material dispensing member 24. In the present embodiment, the material feeding pipe 32, the material injecting pipe 22 and the material dispensing member 24 are all rigid.

In the present preferred embodiment, the material injecting pipe 22 and the material dispensing member 24 are manufactured independently, and then the material injecting pipe 22 and the material dispensing member 24 are connected together. With such an arrangement, the material injecting pipe 22 and the material dispensing member 24 are easy to manufacture so that the mold is simple, thereby reducing the manufacturing cost of the material injecting pipe 22 and the material dispensing member 24. Certainly, the material injecting pipe 22 and the material dispensing member 24 may also be integrally formed and manufactured.

Specifically, a dimeter of an outer circumference of the material dispensing member 24 circumferentially increases from a portion closer to the material injecting pipe 22 to an end of the material dispensing member 24, to form the material dispensing port that gradually becomes larger.

In the present preferred embodiment, the material dispensing port 20 is set in a structural form that gradually becomes larger, thereby functioning to disperse the foaming material, reducing the density of the injected material, reducing the forming pressure, preventing the pile-up of the foaming material and greatly improving the foaming quality. Certainly, the material dispensing port may not be set as a structure that gradually becomes larger, which will be described in detail the following embodiments.

Preferably, the material dispensing port 20 is set in a horn shape. Certainly, the material dispensing port 20 may also be set in other structural shapes, preferably, in a structural form that gradually becomes larger. In addition, the material dispensing port 20 may also be set in a shape of a semicircle, a square or the like.

In the present preferred embodiment, the material injecting pipe 22 and the material dispensing member 24 are detachably connected. Specifically, the material injecting pipe 22 and the material dispensing member 24 are snap-fitted together. Certainly, other connection manners such as welding or bonding may also be employed between the material injecting pipe 22 and the material dispensing member 24. The material dispensing member 24 is provided with a connection portion 26 and a material dispensing portion 16 connected with the material injecting pipe 22, and the horn-shaped material dispensing port 20 is provided on the material dispensing portion 16. Part of the connecting portion 26 surrounds part of the outer circumference of the material injecting pipe 22. Such an arrangement makes the connection between the material dispensing member 24 and the material injecting pipe 22 more reliable. An inner side of the connection portion 26 and the inner side of the material dispensing portion 16 form an inner recess 28, the material injecting pipe 22 is located in the inner recess 28, and an inner surface of the material injecting pipe 22 smoothly transitions with a portion of the inner surface of the material dispensing potion 16 adjacent to the material injecting pipe 22. Preferably, the inner surface of the material injecting pipe 22 is consistent with the portion of the inner surface of the material dispensing potion 16 adjacent to the material injecting pipe 22. Such an arrangement makes the flow of the foaming material from the material injecting pipe 22 to the material dispensing member 24 more smooth without being stuck.

The material injecting device 13 further comprises a sealing cap 48 for sealing the material injecting port 18. When an external force acts on the sealing cap 48, the sealing cap 48 may be driven to open the material injecting port 18. When the external force is removed, the sealing cap 48 returns to the position for sealing the material injecting port 18.

Specifically, in the present embodiment, the sealing cap 48 is an elastic sheet with certain elasticity. The elastic sheet is disposed on the material feeding pipe 32 to cover the material injecting port 18. The connection manner between the elastic sheet and the material feeding pipe 32 may employ bonding, snap-fitting, welding or the like. Certainly, the connection manner between the elastic sheet and the material feeding pipe 32 may also employ other connection manners. Corresponding to the shape of the material injecting port 18, the elastic sheet has an upper semicircular portion and a lower square portion connected with both ends of the upper semicircular portion. Such an arrangement facilitates the flip of the elastic sheet.

A length of the material injecting pipe 22 may be adjusted according to specific design needs, to meet demands for different material-falling point distances during foaming.

The housing 10 comprises a bottom 50 and a top 52. The material injecting port 18 is closer to the bottom 50 than the material dispensing port 20, that is, the foaming material flows from the bottom 50 in a direction gradually closer to the top 52 during injection of the material. The liner 12 comprises a refrigerating liner 58 and a freezing liner 56. The refrigerating liner 58 and the freezing liner 56 are partitioned from each other and a middle beam 54 is formed in between. A shielding device (not shown) is disposed at the middle beam 54. The length of the material injecting device 13 in its extension direction is greater than half of a height of the freezing liner and smaller than the height of the freezing liner. Thus, during the foaming of the injected material, the foaming material will not directly enter an interior of the middle beam 54, so that the foaming density inside the middle beam 54 will not be too high, so that the density of the foaming material is made balanced in the entire foaming process.

Furthermore, since the freezing liner 56 and the refrigerating liner 58 are distributed in a vertical direction, the middle beam 54 is horizontally arranged, and the shielding device is also horizontally arranged and fixed between the freezing liner 56 and the refrigerating liner 58. In addition, the shielding device extends in an arc in the longitudinal direction, and the shielding device protrudes towards the housing 10.

The material injecting device 13 is provided with a material overflow hole (not shown) to prevent the material injecting device 13 from being damaged due to excessive pressure during the foaming process. The position of the material overflow hole is not limited. Preferably, in the longitudinal extension direction of the material injecting device 13, the material overflow hole is disposed at a middle positon of the material injecting device 13 or near a front section of the material injecting port 18. In the present preferred embodiment, the material overflow hole is disposed on the material injecting pipe 22.

Upon injection of the material, a head of the material injecting gun is aligned with the material injecting port 18. With the advancement of the head of the material injecting gun, the elastic sheet flips inwardly so that the head of the material injecting gun enters the material injecting device 13 and stops when it advances to an appropriate position. Then the foaming liquid will enter between the housing 10 and the liner 12 along the inner wall of the material injecting device 13. After the injection of the material is completed, the head of the material injecting gun moves outward. As the head of the material injecting gun is drawn out, the elastic sheet returns to seal the material injecting port 18. In the present preferred embodiment, an upper portion of the material injecting port 18 is set in a semicircular shape, and a lower portion of the material injecting port 18 is set in a square shape, which better facilitates the inward flip of the elastic sheet. Preferably, the elastic sheet is made of alloy steel. Certainly, the elastic sheet may also be made of other materials with a certain deformation recovery function.

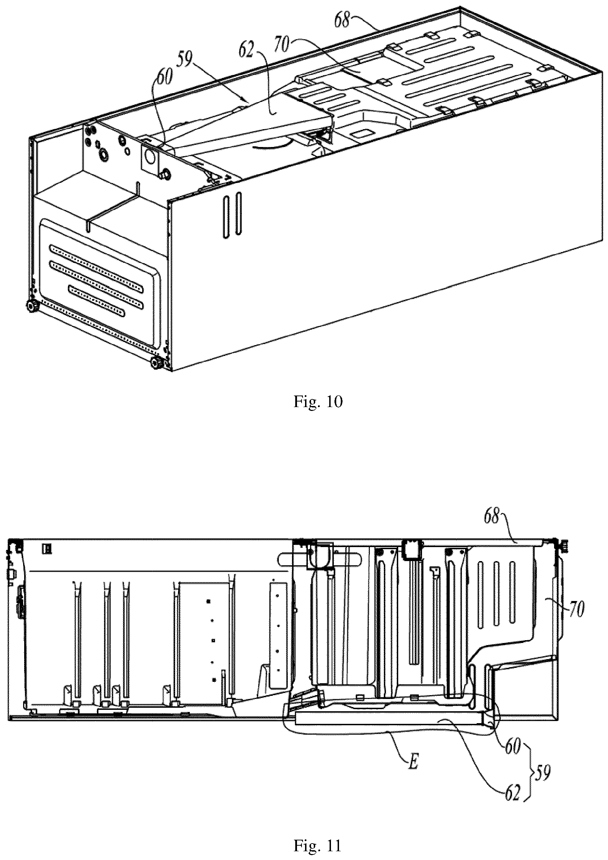

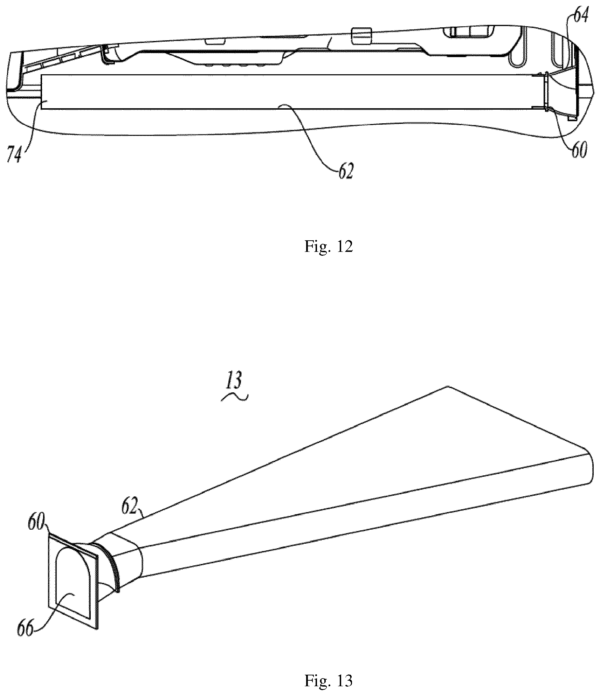

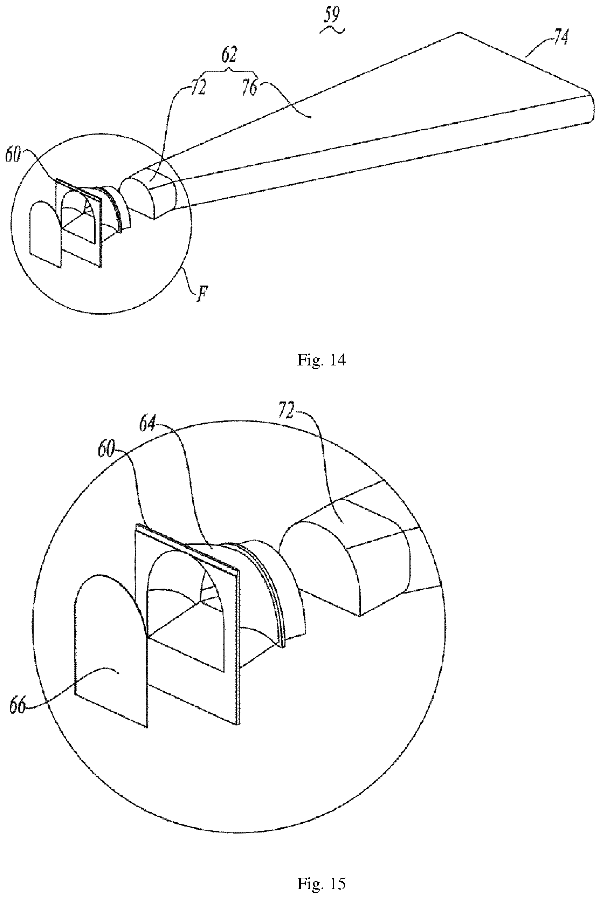

As shown in FIG. 10 through FIG. 15, in a second preferred embodiment provided by the present invention, a material injecting device 59 comprises a material feeding pipe 60 and a material guiding pipe 62 connected with the material feeding pipe 60, an inclined portion 64 being disposed on the material feeding pipe 60. The form of the material feeding pipe 60 and the sealing cap 66 is completely identical with the form in the first embodiment, and will not be described in detail any more here. Unlike the first embodiment, the material injecting device 59 is provided with two mutually-connected sections in the second embodiment.

Specifically, in the present preferred embodiment, the material guiding pipe 62 communicated with the material feeding pipe 60 is set as a flexible material guiding pipe. Certainly, the material guiding pipe 62 may also be set as a hard material guiding pipe having a certain rigidity. As the material guiding pipe 62 employs a flexible material guiding pipe, the material guiding pipe 62 may adapt itself according to the shape of the space between the housing 68 and the liner 70 upon the injection of the material, and one needn't worry that the material guiding pipe 62 interferes with other structures between the housing 68 and the liner 70. The material guiding pipe 62 may perform adaptive deformation according to the shape of the space between the housing 68 and the liner 70, thus greatly enlarging the scope of the application of the material injecting device 59 and preventing the material guiding pipe 62 from being interfered by other structures between the housing 68 and the liner 70.

In addition, the material feeding pipe 60 and the material guiding pipe 62 are independently manufactured, and then the material feeding pipe 60 and the material guiding pipe 62 are connected. In this way, the material feeding pipe 60 and the material guiding pipe 62 are easy to manufacture and the mold is simple, thereby reducing the manufacturing cost of the material feeding pipe 60 and the material guiding pipe 62.

The connection manner of the material guiding pipe 62 and the material feeding pipe 60 may employ adhesion with an adhesive, binding with a bandage, etc. A thickness of the wall of the material guiding pipe 62 is in a range between 50um and 100um.

Furthermore, the material guiding pipe 62 has a connecting portion 72 connected to the material feeding pipe 60 and a distal end far away from the material feeding pipe 60. A diameter of an outer circumference of the material guiding pipe 62 gradually increases from a portion closer to the connecting portion 72 to the distal end so that a material dispensing port 74 that gradually becomes larger is formed. Such an arrangement may function to disperse the foaming material, and reduces the density of the injected material, reduces the foaming pressure, thus preventing the accumulation of the foaming material, and greatly improving the foaming quality.

Preferably, the material dispensing port 74 is horn-shaped. Certainly, the material dispensing port 74 may also be set in other shapes, as long as a diameter of the outer circumference gradually increases from a portion closer to the connecting portion 72 to the distal end, so that the material dispensing port 72 can function to disperse the foaming material.

The material guiding pipe 62 further comprises a material dispensing portion 76 connected with the connecting portion 72. Upon injection of the material, the material guiding pipe 62 is in a stretched state. At this time, the material dispensing portion 76 has an upper surface and a lower surface that are parallel to each other, and a left surface and a right surface which are angled. The upper surface, the left surface, the lower surface and the right surface are connected in turn. Furthermore, when the material guiding pipe 62 is in the stretched state, the angle formed between the left surface and the right surface is an acute angle. The lower surface is a plane, and may be supported on the liner 70. Certainly, the material dispensing portion 76 of the material guiding pipe 62 may also be set in other shapes.

Preferably, the material guiding pipe 62 is made of nylon, polyurethane or PE. Certainly, the material guiding pipe 62 is not limited to the above materials, and may also employ other materials having certain flexibility.

Furthermore, before foaming, the material guiding pipe 62 is fixed on the liner 70 along an extension direction of the material guiding pipe 62 to prevent the material guiding pipe 62 from being folded, thereby avoiding occurrence of obstacles during foaming. Specifically, in the present embodiment, the material guiding pipe 62 is fixed on the liner 70 by adhesion with an adhesive or fixation with a clip before foaming. Certainly, other fixation forms may be used to fix the material guiding pipe 62 on the liner 70.

The length of the material guiding pipe 62 may be adjusted according to specific design needs, thereby meeting demands for different material-falling point distances upon foaming.

The material injecting device 59 is provided with a material overflow hole (not shown) to prevent the charging device 59 from being damaged due to excessive pressure during the foaming process. The position of the material overflow hole is not limited. Preferably, in the longitudinal extension direction of the material injecting device 59, the material overflow hole is disposed in at middle position of the material injecting device 59 or near a front section of the material injecting port 15. Furthermore, the material overflow hole is disposed on the material guiding pipe 62, and the material overflow hole is disposed on a section of the material guiding pipe 62 closer to the material feeding pipe 60.

Upon injection of the material, a head of the material injecting gun (not shown) is aligned with the material injecting port 15. With the advancement of the head of the material injecting gun, the elastic sheet flips inwardly so that the head of the material injecting gun enters the material injecting device 59 and stops when it advances to an appropriate position. Then the foaming liquid will enter along the inner wall of the material injecting device 59. As the foaming material enters, the material guiding pipe 62 is propped up, and the foaming liquid is dispersed and injected between the housing 68 and the liner 70. After the injection is completed, the head of the material injecting gun moves outward. As the head of the material injecting gun is drawn out, the elastic sheet returns to seal the material injecting port 15.

The material feeding pipe 60 has a butt joint connected with the material guiding pipe 62, and a cross section of the butt joint is semicircular. The connecting portion 72 of the material guiding pipe 62 is sleeved on the outside of the butt joint.

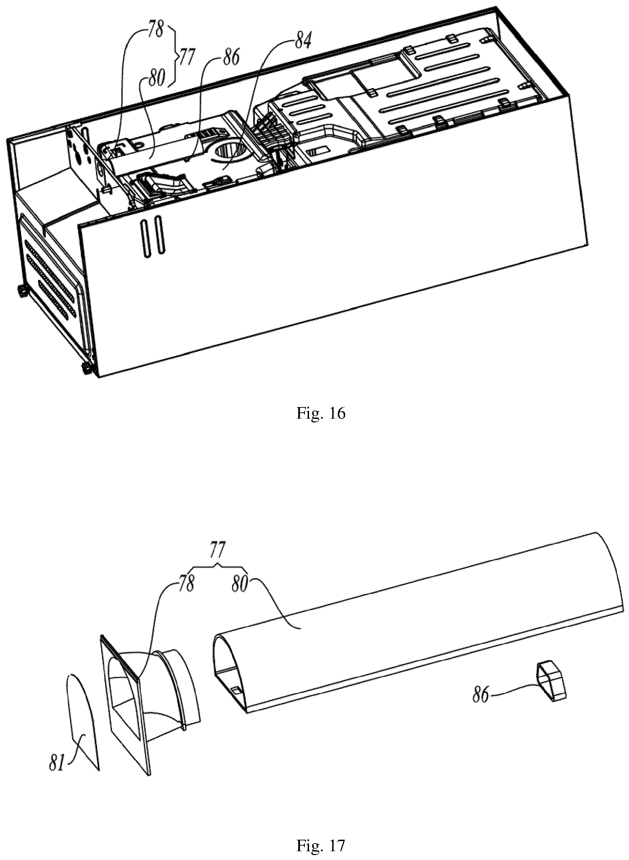

A third preferred embodiment provided by the present invention as shown in FIG. 16 to FIG. 17 is the same as the second embodiment in that the material injecting device 77 is also set in a two-section type. Specifically, the material injecting device 77 comprises a material feeding pipe 78 and a material guiding pipe 80 connected with the material feeding pipe 78. The material feeding pipe 78 is the same as the material feeding pipe in the first embodiment, and the material feeding pipe 78 also has an inclined portion. The forms of the material feeding pipe 78 and a sealing cap 81 are completely the same as those in the first embodiment, and will not be described in detail any longer here. The third embodiment differs from the second embodiment in the shape of the material guiding pipe 80.

In the present embodiment, the material guiding pipe 80 is a hard material guiding pipe having certain rigidity. That is to say, the material guiding pipe 80 always keeps the same shape in a case where the material is injected and the material is not injected. Specifically, the material guiding pipe 80 extends with the same cross section in its longitudinal direction, and the material dispensing port 82 is located on the material guiding pipe 80. Therefore, in the present embodiment, the material dispensing port is not horn-shaped. The cross section of the material guiding pipe 80 is set to be semicircular. Certainly, the cross section of the material guiding pipe 80 may also be set in other shapes.

Furthermore, the liner 84 is further provided with a support member 86 for supporting the material guiding pipe 80. There is a certain gap between the material guiding pipe 80 and the liner, so that the material guiding pipe 80 will not directly contact the liner 84. A lower plane portion of the material guiding pipe 80 abuts against the support member 86.

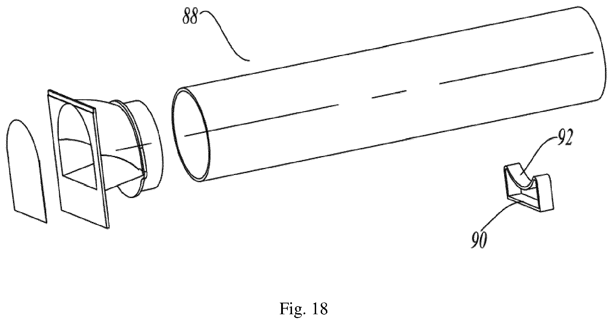

A fourth preferred embodiment provided by the present invention as shown in FIG. 18 is the same as the third embodiment in that the material injecting device is also set in a two-section type. The fourth embodiment differs from the third embodiment in the shape of the material feeding pipe 88 and the shape of the support member 90.

In the present embodiment, the material feeding pipe 88 extends with the same cross section in its longitudinal direction, and the cross section of the material feeding pipe 88 is set as a circle. That is, the material feeding pipe 88 is cylindrical.

Furthermore, the liner is also provided with a support member 90 for supporting the material feeding pipe 88. There is a certain gap between the material feeding pipe 88 and the liner, so that the material feeding pipe 88 will not directly contact the liner. The support member 90 is provided with a circular arc support portion 92 adapted to the shape of the outer circumference of the material feeding pipe 88.

It should be understood that although the description is described according to the embodiments, not every embodiment only comprises one independent technical solution, that such a description manner is only for the sake of clarity, that those skilled in the art should take the description as an integral part, and that the technical solutions in the embodiments may be suitably combined to form other embodiments understandable by those skilled in the art.

The detailed descriptions set forth above are merely specific illustrations of feasible embodiments of the present invention, and are not intended to limit the scope of protection of the present invention. All equivalent embodiments or modifications that do not depart from the art spirit of the present invention should fall within the scope of protection of the present invention.

## Claims

1. A refrigerator, comprising a cabinet and a liner disposed in the cabinet, the cabinet and the liner defining a foaming space, wherein the refrigerator further comprises a material injecting device at least partially located in the foaming space, the material injecting device is provided with a material injecting port and a material dispensing port, the material injecting device is provided with a section of inclined portion at an end adjacent to the material injecting port, and a diameter of an outer circumference of the inclined portion gradually decreases from an end close to the material injecting port to the other end far away from the material injecting port.

2. The refrigerator according to claim 1, wherein the material injecting port comprises a semicircular portion and a square portion tangent to the semicircular portion.

3. The refrigerator according to claim 2, wherein the material injecting device further comprises a sealing cap for sealing the material injecting port; when an external force acts on the sealing cap, the sealing cap may be driven to open the material injecting port; when the external force is removed, the sealing cap returns to a position for sealing the material injecting port.

4. The refrigerator according to claim 3, wherein the sealing cap is set as an elastic sheet, and the elastic sheet has an upper semicircular portion and a lower square portion connected with both ends of the upper semicircular portion.

5. The refrigerator according to claim 1, wherein the material injecting device comprises a material feeding pipe, and a material injecting pipe connected to and communicated with the material feeding pipe, and the inclined portion is disposed on the material feeding pipe.

6. The refrigerator according to claim 5, wherein the material injecting pipe extends with the same cross section in a longitudinal direction, and the material injecting pipe comprises a bottom plane portion which abuts against the housing or the liner.

7. The refrigerator according to claim 5, wherein the material injecting device further comprises a material dispensing member connected to and communicated with the material injecting pipe, the material feeding pipe and the material dispensing member are respectively connected to both opposed ends of the material injecting pipe, the material dispensing port is disposed on the material dispensing member, and a diameter of an outer circumference of the material dispensing member gradually increases from a portion closer to the material injecting pipe to an end of the material dispensing member, to form the material dispensing port that gradually becomes larger.

8. The refrigerator according to claim 1, wherein the material injecting device comprises a material feeding pipe and a material guiding pipe communicated with the material feeding pipe, the inclined portion is disposed on the material feeding pipe, the material guiding pipe has a connecting portion connected to the material feeding pipe and a distal end far away from the material feeding pipe, and a diameter of an outer circumference of the material guiding pipe gradually increases from a portion closer to the connecting portion to the distal end so that the material dispensing port that gradually becomes larger is formed.

9. The refrigerator according to claim 1, wherein the material injecting device comprises a material feeding pipe and a material guiding pipe communicated with the material feeding pipe, the inclined portion is disposed on the material feeding pipe, the liner is provided with a support member for supporting the material guiding pipe, and there is a certain gap between the material guiding pipe and the liner.

10. The refrigerator according to claim 1, wherein the liner comprises a refrigerating liner and a freezing liner which are partitioned from each other and a middle beam is formed in between, a shielding device is disposed at the middle beam, and a length of the material injecting device in its extension direction is greater than half of a height of the freezing liner and smaller than the height of the freezing liner.
